(19) Europäisches Patentamt
European Patent Office
Office européen des brevets

(11) Publication number: **0 405 936 A1**

# (12) EUROPEAN PATENT APPLICATION

(21) Application number: **90307016.7**

(22) Date of filing: **27.06.90**

(51) Int. Cl.5: **C08K 5/524**, C08K 5/527, C08K 5/5393, C08L 81/02

(30) Priority: **27.06.89 JP 164310/89**
**27.06.89 JP 164311/89**

(43) Date of publication of application:
**02.01.91 Bulletin 91/01**

(84) Designated Contracting States:
**AT BE CH DE DK ES FR GB GR IT LI LU NL SE**

(71) Applicant: **POLYPLASTICS CO. LTD.**
**3-13, Azuchicho, 2-chome**
**Chuo-Ku Osaka-shi Osaka(JP)**

Applicant: **HOECHST CELANESE CORPORATION**
**Route 202-206 North**
**Somerville, New Jersey(US)**

(72) Inventor: **Nonaka, Toshifumi**
**53-116, Oginohara, Obuchi**
**Aza, Fuji-shi, Shizuoka(JP)**
Inventor: **Nitoh, Toshikatsu**
**3-12-11, Imaizumi**
**Fuji-shi, Shizuoka(JP)**
Inventor: **Auerbach, Andrew**
**23 Orchard Lane**
**Livingston, Essex, New Jersey(US)**

(74) Representative: **Jackson, Peter et al**
**HYDE, HEIDE & O'DONNELL 10-12 Priests Bridgedge**
**London SW15 5JE(GB)**

## (54) Polyarylene sulfide resin composition.

(57) A polyarylene sulphide composition with improved properties for injection molding of components for electrical, chemical and automotive equipment comprises

(A) 100 parts by weight of a polyarylene sulphide and

(B) 0.01 to 10 parts by weight or an organic bisphosphite or bisphosphonite having the formulae (1), (2) and (3):

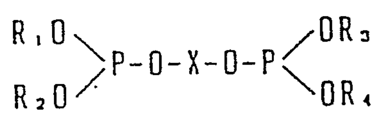

(1)

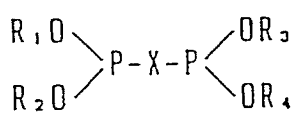

(2)

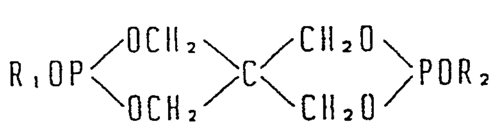

(3)

in which R1, R2, R3 and R4 are each an alkyl, an alkyl having at least one substituent, an aryl, an aryl having at least one substituent or an alkoxy and X is an alkylene, an alkylene having at least one substituent, an arylene or an arylene or an arylene having at least one substituent.

EP 0 405 936 A1

POLYARYLENE SULPHIDE RESIN COMPOSITION

## POLYARYLENE SULPHIDE RESIN COMPOSITION

The present invention relates to a polyarylene sulphide resin composition. More particularly, the present invention is concerned with a polyarylene sulphide resin composition which gives a molded article remarkably improved in the prevention of discoloration.

In recent years, a thermoplastic resin having a combination of excellent mechanical properties, high heat resistance and high chemical resistance with flame retardance has been desired as a component material for electrical and electronic equipment, automobile equipment and chemical equipment.

Polyarylene sulphide resins including polyphenylene sulphide are one group of resins capable of meeting this desire, and demand for them is increased because of their low cost.

In processing of polyarylene sulphide resins by injection molding etc., however, several unfavorable phenomena arise in the appearance of the resins. Thus one problem is a change in the hue of the molded article thereof as a whole in comparison with that before the molding, another is the occurrence of a black stripe or mottled discoloration and another is a high susceptibility to discoloration during high temperature use after molding (hereinafter simply referred to as the "discoloration etc."). In order to solve these problems, a method for preventing the discoloration has been proposed which involves the addition of an organic phosphite (see Japanese Patent Laid-Open Specification No. 1735/1972).

However, the follow-up experiments conducted by the present inventors have revealed that this method also has various problems. Specifically, in this method, the heat resistance of the additive is poor and an evaporation gas or a decomposition gas is liable to be generated during molding, so that this method has not been regarded as satisfactory in respect of all of the required properties, resin workability and appearance.

The object of the present invention is therefore to provide a polyarylene sulphide resin composition which does not suffer discoloration etc. nor evolve a decomposition gas etc. when molded into an article. The object has been achieved by a composition comprising an organic bisphosphite or organic bisphosphonite compound having two phosphorus atoms in its molecule represented by the formulae (1) to (3) as specified below. This composition has been found to have excellent heat stability, it hardly evolves a decomposition gas or an evaporation gas at extruding and molding temperatures, it poses no risk of ignition, it does not hinder such workability requirements as moldability, and it exhibits a much better effect in suppressing discoloration etc. than that of the conventional compositions. Further, the present inventors have found that incorporation of a particular silane compound in this composition is effective in further improving the above-described various properties, which has led to the completion of the present invention.

The polyarylene sulphide composition of the invention is useful for molded parts of instruments and comprises (A) 100 parts by weight of a polyarylene sulphide and (B) 0.01 to 10 parts by weight of an organic bisphosphite or bisphosphonite having the fomulae (1), (2) and (3):

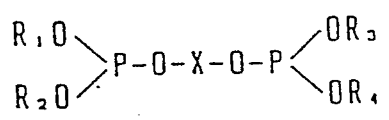
(1)

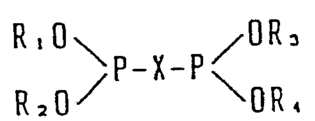
(2)

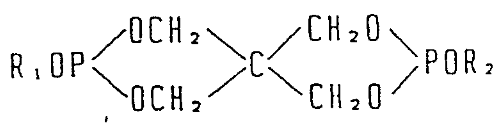
(3)

in which R1, R2, R3 and R4 are each an alkyl, an alkyl having at least one substituent, an aryl, an aryl having at least one substituent or an alkoxy and X is an alkylene, an alkylene having at least one substituent, an arylene or an arylene having at least one substituent.

The composition may further comprise (C) up to 400 parts by weight of an inorganic filler and/or (D) 0.01 to 5 parts by weight of at least one alkoxysilane such as aminoalkoxysilanes, epoxyalkoxysilanes, mercaptoalkoxysilanes and vinylalkoxysilanes.

It is preferable that R1, R2, R3 and R4 are, independently of one another, selected from an alkyl having

5 to 23 carbon atoms, an alkyl having 5 to 23 carbon atoms and having thereon a hydroxy, an aryl selected from the group consisting of phenyl naphthyl and biphenyl, an aryl selected from the group consisting of phenyl, naphthyl and biphenyl and having theron a alkyl having 2 to 8 carbon atoms such as methyl and t-butyl or a hydroxy and an alkoxy having 5 to 23 carbon atoms; and X is selected from the group consisting of an alkylene having 2 to 12 carbon atoms, an oxyalkylene having the formula: -[(CH2)n-O-]m-, n oxyalkylene having the formula: -[(CH2)n-O-]m-, n being 2 to 4, m being 2 to 4 and having thereon a hydroxy or an alkyl having 1 to 6 carbon atoms such as methyl, an arylene selected from the group consisting of phenylene, biphenylene and bisphenylene and an arylene selected from the group consisting of phenylene, biphenylene and bisphenylene and having thereon an alkyl having 1 to 6 carbon atoms such as methyl and t-butyl.

Specifically, according to the present invention, there is provided a polyarylene sulphide resin composition comprising:

(A) 100 parts by weight of a polyarylene sulphide resin and, added thereto,

(B) 0.01 to 10 parts by weight of an organic bisphosphite represented by the following formula (1) or (2):

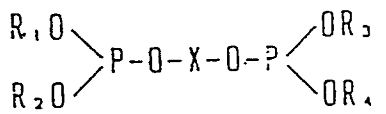

(1)

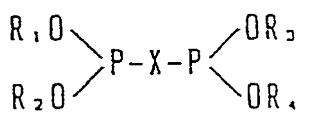

(2)

wherein $R_1$, $R_2$, $R_3$ and $R_4$ which may be the same or different are each a group selected from among alkyl, substituted alkyl, aryl substituted aryl, and alkoxy groups and X is a divalent alkylene substituted alkylene, arylene or substituted arylene group, and

(C) 0 to 400 parts by weight of an inorganic filler.

Specifically, according to the present invention, there is provided a polyarylene sulphide resin composition comprising:

(A) 100 parts by weight of a polyarylene sulphide resin and, added thereto,

(B) 0.01 to 10 parts by weight of an organic bisphosphite represented by the following formula (3)

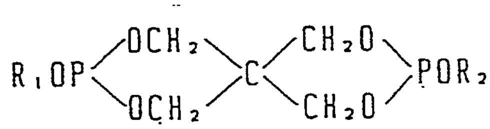

(3)

wherein $R_1$ and $R_2$ which may be the same or different are each of a group selected from among alkyl, substituted alkyl, aryl, substituted aryl, and alkoxy groups, and

(C) 0 to 400 parts by weight of an inorganic filler.

Further, according to the present invention, there is provided a polyarylene sulphide resin composition further comprising (D) 0.01 to 5 parts by weight of one or more silane compounds selected from among alkoxysilane, epoxyalkoxysilane, mercaptoalkoxysilane, and vinylalkoxysilane in addition to the above described components (A), (B), and (C).

The base resin as component (A) of the composition of the present invention is a polyarylene sulphide resin (PAS) and mainly comprises the following repeating units -(-Ar-S-)-, wherein Ar is an arylene group.

Examples of the arylene group include:

a p-phenylene group ( 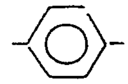 );

a m-phenylene group ( 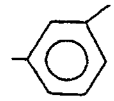 );

an o-phenylene group ( 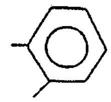 );

a substituted phenylene group ( 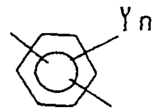 );

wherein Y is an alkyl group. preferably a $C_1$ - $C_6$ alkyl group or a phenyl group and n is an integer of 1 to 4;

a p,p'-diphenylene sulphone group

( 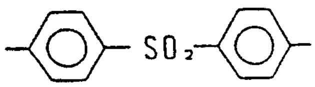 );

a p,p'biphenylene group ( 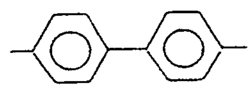 );

a p,p'-diphenylene ether group ( 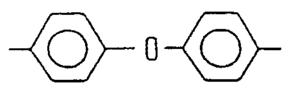 );

a p,p-diphenylene carbonyl group ( 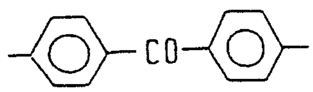 );

and

a naphthalene group ( 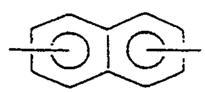 ).

In this case, it is preferred to use a polymer comprising the same repeating units among arylene sulphide groups constituting the above-described arylene groups, i.e., a homopolymer. In some cases, a copolymer containing different kinds of repeating units is preferable from the viewpoint of workability of the composition.

The homopolymer is particularly preferably a substantially linear polymer comprising p-phenylene sulphide groups as the repeating unit wherein a p-phenylene group is used as the arylene group.

The copolymer may comprise two or more different kinds of arylene sulphide groups composed of the above-described arylene groups. Among them, the combinations including a p-phenylene sulphide group and a m-phenylene sulphide group are particularly preferred. In particular, a compolymer comprising at least 70% by mole of p-phenylene sulphide groups is suitable from the viewpoint of properties such as heat resistance, moldability and mechanical properties.

In this case, a copolymer comprising repeating units of the components in the block form (e.g., one described in Japanese Patent Laid-Open Specification No. 14228/1986) is preferably used because it is substantially the same in workability as the copolymer comprising repeating units of the components in the random form but is superior in heat resistance and mechanical properties.

Although the polyarylene sulphide resin as component (A) used in the present invention may be a polymer prepared by curring through oxidative crosslinking or thermal crosslinking, a polymer having a substantially linear structure and prepared by the polycondensation of monomers mainly composed of bifunctional monomers is preferred.

It is particularly suitable to use a linear polymer having a melt viscosity of 1 x 10 to 5 x $10^4$P, preferably 50 to 5 x $10^4$P, particularly preferably 100 to 5 x $10^4$P, as determined under conditions of a temperature of 310°C and a shear rate of 5/sec. When the melt viscosity is less than 10 P, the flowability is excessively high, which makes it difficult to conduct melt processing. In this case, even though the molded article could be prepared, the mechanical properties thereof are unfavorably low. On the other hand, when the melt viscosity exceeds 5 x $10^4$ P, it is difficult to conduct melt processing because the flowability is poor.

The organic bisphophite or organic bisphosphonite compound added as compound (B) may be any compound having a structure represented by the above-described formula (1) to (3).

In the formulae (1) to (3), $R_1$ to $R_4$ are selected from among alkyl, substituted alkyl, aryl, substituted aryl, and alkoxy groups and may be the same or different.

In particular, from the viewpoint of stability during molding, $R_1$ to $R_4$ are each preferably an alkyl group having 5 or more carbon atoms, a substituted alkyl group, an aryl group or a substituted aryl group.

It is particularly preferred that $R_1$ to $R_4$ be each an alkyl group having 10 or more carbon atoms or an alkoxy group, or at least one of $R_1$ to $R_4$ be an aryl or substituted aryl group. Specifically, particularly preferred examples of the compound include substances respectively having structures A, B, C and D described in Note 1 to Tables 1 to 3.

X is a divalent alkylene, substituted alkylene, arylene or substituted arylene group.

The amount of component (B) used in the present invention and represented by the above-described formulae (1) to (3) is 0.01 to 10 parts by weight, preferably 0.1 to 5 parts by weight based on 100 parts by weight of the polyarylene sulphide resin. When the amount is too small, no effect intended in the present invention can be attained, while when the amount is excessively large, there arise unfavorable problems such as inferior properties and gas generation.

Although the inorganic filler component (C) is not always necessary, it is preferably incorporated for the purpose of preparing a molded article with excellent performance in such qualities as mechanical strength, heat resistance, dimensional stability (resistance to deformation and warping), and electrical properties. Any fibrous and non-fibrous (particulate and flaky) fillers may be used as the inorganic filler depending upon the required duty.

Examples of the fibrous filler include inorganic fibrous substances such as glass fiber, asbestos fiber, carbon fiber, silica fiber, silica-alumina fiber, zirconia fiber, boron nitride fiber, silicon nitride fiber, boron fiber and potassium titanate fiber, and fibrous metals such as stainless steel, aluminium, titanium, copper and brass. Among them, glass fiber and carbon fiber are representative fibrous fillers. It is also possible to use high-melting organic fibrous materials such as polyamides, fluororesins, and acrylic resins.

Examples of the particulate filler include carbon black silicates such as silica, quartz powder, glass bead, glass powder, calcium silicate, aluminium silicate, kaolin, talc, clay, diatomaceous earth and wollastonite, metallic oxides such as iron oxide, titanium oxide, zinc oxide and alumina, metal salts of carbonic acid such as calcium carbonate and magnesium carbonate, metal salts of sulphuric acid such as calcium sulphate and barium sulphate, and other fillers such as silicon carbide, silicon nitride, boron nitride, and various powdery metals.

Examples of the flaky filler include mica, glass flake, and various metal foils.

These inorganic fillers may be used alone or in any combination of two or more of them. A combination of a fibrous filler, particularly a glass fiber or a carbon fiber with a particulate filler and/or a flaky filler is preferred particularly for the purpose of imparting a combination of mechanical strength with dimensional stability, electrical properties, etc.

A combination of a glass fiber having an average fiber length of 30 to 500μm with an inorganic particulate material having an aspect ratio or 5 or less is particularly preferred.

It is preferred to use a binder or a surface treatment together with the filler according to need. Examples thereof include functional compounds such as epoxy compounds, isocyanate compounds, silane compounds, and titanate compounds. These compounds may be used by previously conducting surface treatment of binding treatment, or alternatively may be added simultaneously in the preparation of the material.

The amount of the inorganic filler used as component (C) is 0 to 400 parts by weight, preferably 10 to 250 parts by weight based on 100 parts by weight of the polyarylene sulphide resin as component (A). When the amount is too small, the mechanical strength is poor, while when the amount is too large, not only it becomes difficult to conduct molding operation but also there occurs a problem of reduction in the mechanical strength of the molded article.

The silane compound which is preferably incorporated as component (D) of the present invention in the above-described components (A), (B), and (C) is one or more alkoxysilanes selected from among aminoalkoxysilane, epoxyalkoxysilane, mercaptoalkoxysilane, and vinylalkoxysilane.

The aminoalkoxysilane may be any silane compound as far as it has at least one amino group and two or three alkoxy groups per molecule, and examples thereof include
γ-aminopropyltriethoxysilane,
γ-aminopropyltrimethoxysilane,
γ-aminopropylmethyldiethoxysilane,
γ-aminopropylmethyldimethoxysilane,
N-β(aminoethyl)-γ-aminopropyltriethoxysilane,
N-β(aminoethyl)-γ-aminopropyltrimethoxysilane,
N-β(aminoethyl)-γ-aminopropylmethyldiethoxysilane,
N-β(aminoethyl)-γaminopropylmethyldimethoxysilane,
N-phenyl-γ-aminopropyltriethoxysilane and
N-phenyl-γ-aminopropyltrimethoxysilane.

The epoxyalkoxysilane may be any silane compound as far as it has at least one epoxy group and two or three alkoxy groups per molecule, and examples thereof include
γ-glycidoxypropyltrimethoxysilane,
β-(3,4-epoxycyclohexyl) ethyltrimethoxysilane, and
γ-glycidoxypropyltriethoxysilane.

The mercaptoalkoxysilane may be any silane compound as far as it has at least one mercapto group and two or three alkoxy groups per molecule, and examples thereof include
γ-mercaptopropyltrimethoxysilane and
γ-mercaptopropyltriethoxysilane.

The vinylalkoxysilane may be any silane compound as far as it has at least one vinyl group and two or three alkoxy groups per molecule, and examples thereof include vinyltriethoxysilane, vinyltrimethoxysilane and vinyltris (β-methoxyethoxy)silane.

The amount of the above-described alkoxysilane (D) used in the present invention is 5 parts by weight or less, preferably 0.01 to 3 parts by weight based on 100 parts by weight of the polyarylene sulphide resin. When the amount is too small, no significant effect intended in the present invention can be attained, while when the amount is too large, mechanical properties are unfavorably reduced.

It has been found that incorporation of component (D) is not only useful for improving the moldability and mechanical properties but also, when combined with the use of component (B), it contributes to a further improvement in the effect of a reduction of both the discoloration caused by molding and the discoloration of a molded article over time at a high temperature.

The composition of the present invention may be mixed with another thermoplastic resin in such a minor amount as will not hinder the object of the present invention. The other thermoplastic resin used herein may be any one which is stable at a high temperature. Examples thereof include aromatic polyesters comprising aromatic dicarboxylic acids and diols or hydroxy carboxylic acids, such as polyethylene terephthalate and polybutylene terephthalate, polyamides, polycarbonates, ABS, polyphenylene oxides, polyalkyl acrylates, polyacetals, polysulphones, polyether sulphones, polyether imides, polyether ketones and fluororesins. It is also possible to use these thermoplastic resins in the form of a mixture of two or more of them.

Further, the composition of the present invention may contain known materials which are added to ordinary thermoplastic and thermosetting resins, i.e. stabilizers such as antioxidants and ultraviolet absorbers, antistatic agents, releasing agents, flame retardants, flame retarding assistants, colorants such as dyes and pigments, lubricants, and nucleating agents depending upon the required duty.

The polyarylene sulphide resin composition of the present invention can be prepared by making use of facilities and methods employed in the preparation of ordinary synthetic resin compositions. They include, for example, a method which comprises mixing the necessary components, kneading the mixture with a single-screw or twin-screw extruder, and conducting extrusion to prepare pellets for molding; a method wherein part of the necessary components are mixed together as a master batch and then molded; and a method wherein in order to improve the dispersion and mixing of each component, part or the whole of the polyarylene sulphide resin is pulverised, and mixing and melt extrusion are then conducted.

The composition of the invention enables preparation of a molded article remarkably improved in coloration, having high whiteness and being less susceptible to stripe discoloration or mottled discoloration. Further, the polyarylene sulphide resin composition of the present invention has excellent heat resistance, is easily extruded or molded, hardly generates an evaporation gas or a decomposition gas during extruding or molding, and has excellent moldability and mechanical properties.

## Examples

The present invention will now be described in more detail by way of the following Examples, which should not be construed as limiting the scope of the invention.

### Examples 1 to 58 and Comparative Examples 1 to 6

Additives listed in Tables 1 to 5 were added respectively in amounts specified in those Tables to a polyphenylene sulphide resin and they were premixed in a Henschel mixer for 5 min. Further, a commercially available glass fiber (with a diameter of 13μm and a length of 4mm) and calcium carbonate were added respectively in amounts specified in the Table, and they were mixed in a blender for 2 min. The mixture was extruded with an extruder at a cylinder temperature of 310°C to prepare pellets of a polyphenylene sulphide resin composition.

The pellets were molded into a flat test piece having a thickness of 3mm and a size of 50mm x 70mm with an injection molding machine at a cylinder temperature of 320°C and a mold temperature of 150°C. The molded article was examined for hue by means of a differential colorimeter manufactured by Nippon Denshoku Co., Ltd.

The extent of black stripe or mottled discoloration occuring on the surface of the molded article was observed. The resin molten during the injection molding was subjected to free flow to determine the amount of the gas evolved therefrom. A tensile bar was molded from the pellets by means of an injection molding machine at a cylinder temperature of 320°C and a mold temperature of 150°C according to ASTM D-638, and the obtained bar was subjected to measurement of the tensile strength and tensile elongation. The results are shown in Tables 1 to 5.

Note 1: in Tables 1 to 3

A : 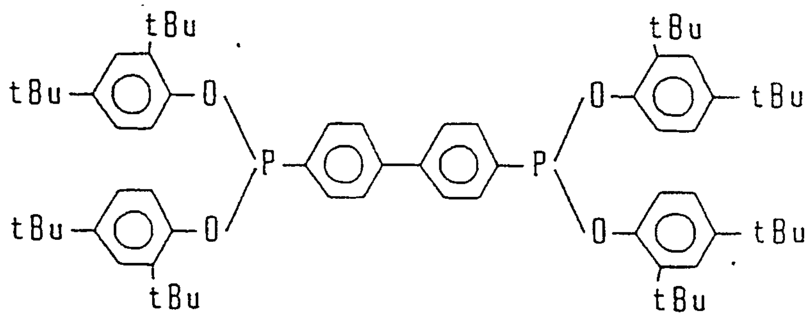

B : 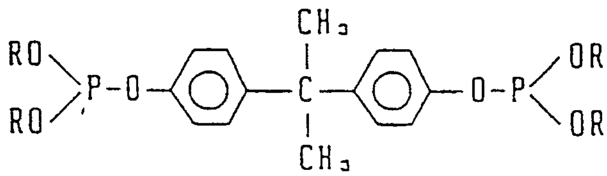

R = $C_{12}$ - $C_{15}$ alkyl group

C : 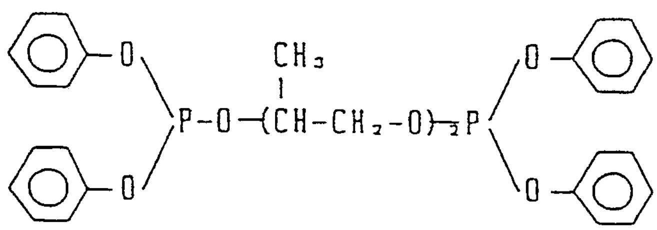

D : 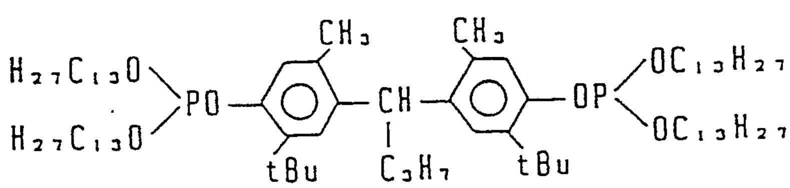

Note 1: in Tables 4 and 5

A : 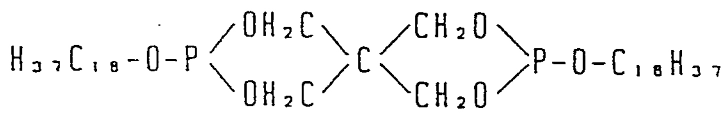

B : 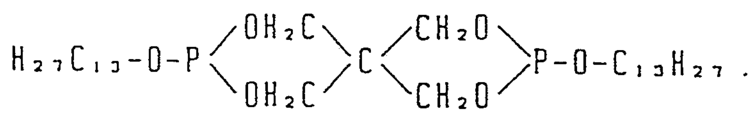

C : 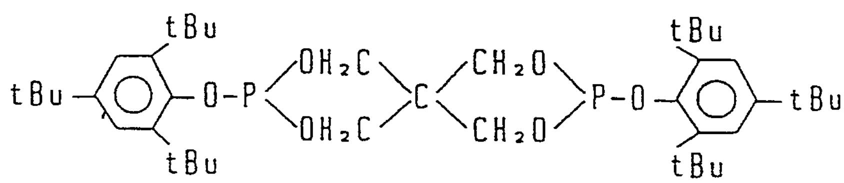

D : 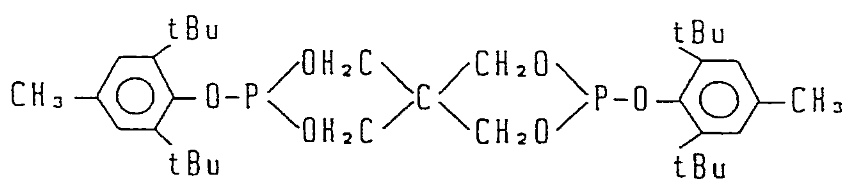

Note 1: in Tables 1 to 5

E : 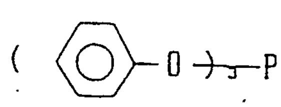

F : $(C_{10}H_{21}O)_3P$

Note 2:

G: γ-aminopropyltriethoxysilane
H: γglycidoxypropyltimethoxysilane
I: γ-mercaptopropyltimethoxysilane
J: vinyltrimethoxysilane

Table 1

| | Composition | | | | | Evaluation | | | | | | | |
|---|---|---|---|---|---|---|---|---|---|---|---|---|---|
| | (A) PPS | (B) phosphorous compd. | | (C) glass fiber | (C) calcium carbonate | hue* | | | black stripe, discoloration | gas evolution | tensile strength | tensile elongation |
| | (pts.wt.) | kind (Note:1) | (pts.wt.) | (pts.wt.) | (pts.wt.) | L | a | b | | | (kg/cm$^2$) | (%) |
| Ex. 1 | 100 | A | 1.5 | 0 | 0 | 65 | 0 | 9 | free | free | 840 | 10.0 |
| Ex. 2 | 100 | A | 0.1 | 65 | 0 | 62 | 0 | 8 | slight | free | 1760 | 1.6 |
| Ex. 3 | 100 | A | 0.5 | 65 | 0 | 67 | 1 | 9 | slight | free | 1760 | 1.6 |
| Ex. 4 | 100 | A | 1.5 | 65 | 0 | 69 | 1 | 11 | free | free | 1750 | 1.6 |
| Ex. 5 | 100 | A | 3 | 65 | 0 | 69 | 1 | 11 | free | slight | 1750 | 1.6 |
| Ex. 6 | 100 | A | 1.5 | 100 | 100 | 75 | 0 | 11 | free | free | 1450 | 1.0 |
| Ex. 7 | 100 | B | 0.1 | 65 | 0 | 64 | 0 | 7 | slight | free | 1750 | 1.6 |
| Ex. 8 | 100 | B | 0.5 | 65 | 0 | 66 | 1 | 9 | slight | free | 1750 | 1.6 |
| Ex. 9 | 100 | B | 1.5 | 65 | 0 | 67 | 1 | 10 | slight | slight | 1750 | 1.6 |
| Ex. 10 | 100 | B | 3 | 65 | 0 | 68 | 0 | 10 | free | slight | 1740 | 1.6 |
| Ex. 11 | 100 | C | 0.1 | 65 | 0 | 63 | 1 | 8 | slight | free | 1750 | 1.6 |
| Ex. 12 | 100 | C | 0.5 | 65 | 0 | 65 | 1 | 9 | slight | free | 1740 | 1.6 |
| Ex. 13 | 100 | C | 1.5 | 65 | 0 | 67 | 0 | 11 | slight | slight | 1740 | 1.6 |
| Ex. 14 | 100 | C | 3 | 65 | 0 | 67 | 1 | 11 | free | slight | 1730 | 1.6 |
| Ex. 15 | 100 | D | 0.1 | 65 | 0 | 60 | 0 | 10 | slight | free | 1740 | 1.6 |
| Ex. 16 | 100 | D | 0.5 | 65 | 0 | 66 | -1 | 10 | slight | slight | 1740 | 1.6 |
| Ex. 17 | 100 | D | 1.5 | 65 | 0 | 68 | 1 | 12 | free | slight | 1740 | 1.6 |
| Ex. 18 | 100 | D | 3 | 65 | 0 | 70 | 0 | 13 | free | medium | 1720 | 1.5 |

*Hue: A higher L value of the sample suggests a higher whiteness and a less extent of discoloration.

Table 2

| | Composition | | | | | | | Evaluation | | | | | | | |
|---|---|---|---|---|---|---|---|---|---|---|---|---|---|---|---|
| | (A) PPS | (B) phosphorous compd. | | (C) glass fiber | (C) calcium carbonate | (D) silane compound | | hue* | | | balck stripe, discoloration | gas evolution | tensile strength | tensile elongation |
| | (pts.wt.) | kind (Note 1) | (pts.wt.) | (pts.wt.) | (pts.wt.) | kind (Note 2) | (pts.wt.) | L | a | b | | | (kg/cm$^2$) | (%) |
| Ex. 19 | 100 | A | 1.5 | 0 | 0 | G | 0.5 | 70 | 0 | 8 | free | free | 930 | 15.1 |
| Ex. 20 | 100 | A | 1.5 | 65 | 0 | G | 0.1 | 73 | 1 | 8 | free | free | 1770 | 1.6 |
| Ex. 21 | 100 | A | 1.5 | 65 | 0 | G | 0.5 | 75 | 0 | 9 | free | free | 1820 | 1.8 |
| Ex. 22 | 100 | A | 1.5 | 65 | 0 | G | 1.0 | 77 | 1 | 10 | free | free | 1840 | 1.8 |
| Ex. 23 | 100 | A | 1.5 | 100 | 100 | G | 0.5 | 79 | -1 | 7 | free | free | 1530 | 1.1 |
| Ex. 24 | 100 | B | 1.5 | 65 | 0 | G | 0.5 | 73 | 0 | 7 | free | free | 1810 | 1.8 |
| Ex. 25 | 100 | C | 1.5 | 65 | 0 | G | 0.5 | 73 | 1 | 9 | free | free | 1810 | 1.8 |
| Ex. 26 | 100 | D | 1.5 | 65 | 0 | G | 0.5 | 71 | 1 | 11 | free | free | 1800 | 1.7 |
| Ex. 27 | 100 | A | 1.5 | 65 | 0 | H | 0.5 | 71 | 1 | 10 | free | free | 1810 | 1.8 |
| Ex. 28 | 100 | A | 1.5 | 65 | 0 | I | 0.5 | 72 | -1 | 9 | free | free | 1810 | 1.8 |
| Ex. 29 | 100 | A | 1.5 | 65 | 0 | J | 0.5 | 71 | 0 | 11 | free | free | 1800 | 1.7 |

*Hue: A higher L value of the sample suggests a higher whiteness and a less extent of discoloration.

Table 3

| | Composition | | | | | | | | Evaluation | | | | | | |
|---|---|---|---|---|---|---|---|---|---|---|---|---|---|---|---|
| | (A) PPS | (B) phosphorous compd. | | (C) glass fiber | (C) calcium carbonate | (D) silane compound | | hue* | | | black stripe, discoloration | gas evolution | tensile strength | tensile elongation |
| | (pts.wt.) | kind (Note 1) | (pts.wt.) | (pts.wt.) | (pts.wt.) | kind (Note 2) | (pts.wt.) | L | a | b | | | (kg/cm²) | (%) |
| Comp. Ex.1 | 100 | - | 0 | 0 | 0 | - | 0 | 63 | 0 | 8 | slight | free | 850 | 10.2 |
| Comp. Ex.2 | 100 | - | 0 | 65 | 0 | - | 0 | 61 | 1 | 7 | severe | free | 1750 | 1.6 |
| Comp. Ex.3 | 100 | - | 0 | 100 | 100 | - | 0 | 73 | -1 | 5 | severe | free | 1450 | 1.0 |
| Comp. Ex.4 | 100 | E | 1.5 | 65 | 0 | - | 0 | 63 | 2 | 13 | medium | severe | 1690 | 1.4 |
| Comp. Ex.5 | 100 | F | 1.5 | 65 | 0 | - | 0 | 64 | 1 | 10 | medium | severe | 1720 | 1.5 |
| Comp. Ex.6 | 100 | - | 0 | 65 | 0 | G | 0.5 | 62 | 2 | 6 | severe | free | 1820 | 1.8 |

*Hue: A higher L value of the sample suggests a higher whiteness and a less extent of discoloration.

Table 4

| | Composition | | | | | Evaluation | | | | | | | |
|---|---|---|---|---|---|---|---|---|---|---|---|---|---|
| | (A) PPS | (B) phosphorous compd. | | (C) glass fiber | (C) calcium carbonate | hue* | | | black stripe, discoloration | gas evolution | tensile strength | tensile elongation |
| | (pts.wt.) | kind (Note:1) | (pts.wt.) | (pts.wt.) | (pts.wt.) | L | a | b | | | ($kg/cm^2$) | (%) |
| Ex. 30 | 100 | A | 1.5 | 0 | 0 | 67 | 0 | 9 | free | free | 830 | 9.9 |
| Ex. 31 | 100 | A | 0.1 | 65 | 0 | 70 | 0 | 8 | slight | free | 1760 | 1.6 |
| Ex. 32 | 100 | A | 0.5 | 65 | 0 | 74 | 1 | 10 | free | free | 1760 | 1.6 |
| Ex. 33 | 100 | A | 1.5 | 65 | 0 | 74 | 0 | 9 | free | free | 1750 | 1.6 |
| Ex. 34 | 100 | A | 3 | 65 | 0 | 75 | 0 | 11 | free | slight | 1740 | 1.6 |
| Ex. 35 | 100 | A | 1.5 | 100 | 100 | 78 | 0 | 11 | free | free | 1430 | 1.0 |
| Ex. 36 | 100 | B | 0.1 | 65 | 0 | 72 | -1 | 9 | slight | free | 1740 | 1.6 |
| Ex. 37 | 100 | B | 0.5 | 65 | 0 | 74 | -1 | 10 | free | slight | 1740 | 1.6 |
| Ex. 38 | 100 | B | 1.5 | 65 | 0 | 74 | 0 | 12 | free | slight | 1730 | 1.6 |
| Ex. 39 | 100 | B | 3 | 65 | 0 | 76 | 0 | 13 | free | medium | 1730 | 1.6 |
| Ex. 40 | 100 | C | 0.1 | 65 | 0 | 69 | -1 | 10 | slight | free | 1760 | 1.6 |
| Ex. 41 | 100 | C | 0.5 | 65 | 0 | 72 | -1 | 9 | slight | free | 1760 | 1.6 |
| Ex. 42 | 100 | C | 1.5 | 65 | 0 | 74 | 0 | 10 | free | free | 1740 | 1.6 |
| Ex. 43 | 100 | C | 3 | 65 | 0 | 74 | 0 | 11 | free | slight | 1720 | 1.5 |
| Ex. 44 | 100 | D | 0.1 | 65 | 0 | 64 | 0 | 9 | slight | free | 1740 | 1.6 |
| Ex. 45 | 100 | D | 0.5 | 65 | 0 | 66 | 0 | 9 | slight | free | 1740 | 1.6 |
| Ex. 46 | 100 | D | 1.5 | 65 | 0 | 68 | 1 | 11 | slight | free | 1720 | 1.5 |
| Ex. 47 | 100 | D | 3 | 65 | 0 | 72 | 0 | 11 | free | slight | 1700 | 1.5 |

*Hue: A higher L value of the sample suggests a higher whiteness and a less extent of discoloration.

Table 5

| | Composition | | | | | | | Evaluation | | | | | | |
|---|---|---|---|---|---|---|---|---|---|---|---|---|---|---|
| | (A) PPS | (B) phosphorous compd. | | (C) glass fiber | (C) calcium carbonate | (D) silane compound | | hue* | | | black stripe, discoloration | gas evolution | tensile strength | tensile elongation |
| | (pts.wt.) | kind (Note 1) | (pts.wt.) | (pts.wt.) | (pts.wt.) | kind (Note 2) | (pts.wt.) | L | a | b | | | (kg/cm$^2$) | (%) |
| Ex. 48 | 100 | A | 1.5 | 0 | 0 | G | 0.5 | 71 | 0 | 9 | free | free | 920 | 14.3 |
| Ex. 49 | 100 | A | 1.5 | 65 | 0 | G | 0.1 | 77 | 1 | 10 | free | free | 1770 | 1.6 |
| Ex. 50 | 100 | A | 1.5 | 65 | 0 | G | 0.5 | 79 | 1 | 11 | free | free | 1810 | 1.8 |
| Ex. 51 | 100 | A | 1.5 | 65 | 0 | G | 1.0 | 79 | 2 | 11 | free | free | 1820 | 1.8 |
| Ex. 52 | 100 | A | 1.5 | 100 | 100 | G | 0.5 | 82 | 0 | 11 | free | free | 1510 | 1.1 |
| Ex. 53 | 100 | B | 1.5 | 65 | 0 | G | 0.5 | 75 | 0 | 9 | free | free | 1800 | 1.7 |
| Ex. 54 | 100 | C | 1.5 | 65 | 0 | G | 0.5 | 76 | 1 | 10 | free | free | 1800 | 1.7 |
| Ex. 55 | 100 | D | 1.5 | 65 | 0 | G | 0.5 | 71 | 0 | 10 | free | free | 1780 | 1.6 |
| Ex. 56 | 100 | A | 1.5 | 65 | 0 | H | 0.5 | 76 | 2 | 10 | free | free | 1810 | 1.8 |
| Ex. 57 | 100 | A | 1.5 | 65 | 0 | I | 0.5 | 78 | 0 | 10 | free | free | 1800 | 1.8 |
| Ex. 58 | 100 | A | 1.5 | 65 | 0 | J | 0.5 | 76 | 1 | 11 | free | free | 1790 | 1.7 |

*Hue: A higher L value of the sample suggests a higher whiteness and a less extent of discoloration.

## Claims

1. A polyarylene sulphide resin composition comprising:
(A) 100 parts by weight of a polyarylene sulphide and
(B) 0.01 to 10 parts by weight of an organic bisphosphite or bisphosphonite selected from those of the formulae (1), (2) and (3):

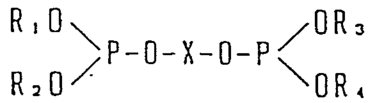 (1)

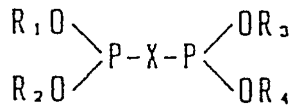 (2)

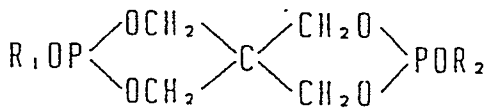 (3)

in which $R_1$, $R_2$, $R_3$ and $R_4$ are each an alkyl, an alkyl having at least one substituent, an aryl, an aryl having at least one substituent or an alkoxy and X is an alkylene, an alkylene having at least one substituent, an arylene or an arylene having at least one substituent.

2. A composition as claimed in claim 1, in which the polyarylene sulphide (A) is a substantially linear homopolymer comprising p-phenylene sulphide groups as the repeating unit.

3. A composition as claimed in claim 1, in which the polyarylene sulphide is a copolymer comprising a combination of p-phenylene sulphide groups and m-phenylene sulphide groups as the repeating units.

4. A composition as claimed in claim 3, in which the polyarylene sulphide copolymer comprises at least 50 mole % of p-phenylene sulphide groups.

5. A composition as claimed in any preceding claim, in which the polyarylene sulphide is a substantially linear polymer having a melt viscosity of 1 x 10 to 5 x $10^4$ P.

6. A composition as claimed in any preceding claim, in which the amount of component (B) is 0.1 to 5 parts by weight based on 100 parts by weight of the polyarylene sulphide (A).

7. A composition is claimed in any preceding claim, in which $R_1$, $R_2$, $R_3$ and $R_4$ in the formulae of component (B) are independently of one another selected from the group consisting of an alkyl having 5 to 23 carbon atoms, an alkyl having 5 to 23 carbon atoms and having thereon a hydroxy, an aryl selected from the group consisting of phenyl, naphthyl and biphenyl, an aryl selected from the group consisting of phenyl, naphthyl and biphenyl and having thereon an alkyl having 5 to 23 carbon atoms; and X is selected from the group consisting of an alkylene having 2 to 12 carbon atoms, an oxyalkylene having the formula: -[(CH2)n-O-]m-, n being 2 to 4, m being 2 to 4 and having thereon a hydroxy or an alkyl having 1 to 6 carbon atoms, an arylene selected from the group consisting of phenylene, biphenylene, and bisphenylene and an arylene selected from the group consisting of phenylene, biphenylene and bisphenylene and having thereon an alkyl having 1 to 6 carbon atoms.

8. A composition as claimed in claim 7, in which $R_1$, $R_2$, $R_3$ and $R_4$ are each an alkyl group having 10 or more carbon atoms or an alkoxy group, or at least one of $R_1$, $R_2$, $R_3$ and $R_4$ is an aryl or substituted aryl group.

9. A composition is claimed in any preceding claim, which further comprises (C) up to 400 parts by weight of an inorganic filler.

10. A composition is claimed in any preceding claim, which further comprises (D) 0.01 to 5 parts by weight of a least one alkoxysilane selected from the group consisting of aminoalkoxysilanes, epoxyalkoxysilanes, mercaptoalkoxysilanes and vinylalkoxysilanes.

European Patent Office

# EUROPEAN SEARCH REPORT

Application Number

EP 90 30 7016

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | PATENT ABSTRACTS OF JAPAN vol. 12, no. 433 (C-543)(3280) 15 November 1988, & JP-A-63 159470 (IDEMITSU PETROCHEM CO LTD) 02 July 1988, * the whole document * ----- | 1-10 | C08K5/524<br>C08K5/527<br>C08K5/53993<br>C08L81/02 |

| TECHNICAL FIELDS SEARCHED (Int. Cl.5 ) |
|---|
| C08K<br>C08L |

The present search report has been drawn up for all claims

| Place of search | Date of completion of the search | Examiner |
|---|---|---|
| THE HAGUE | 01 OCTOBER 1990 | HOFFMANN K.W. |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document